# EUROPEAN PATENT APPLICATION

(11) **EP 1 838 097 A2**
(43) Date of publication of application: **26.09.2007**
(21) Application number: 07101072.2
(22) Date of filing: 24.01.2007
(51) Int. Cl.: H04N 5/64, H04R 1/02

(54) **Audio-video device**

(30) Priority: 21.03.2006 CN 200610068188
(71) Applicant: ASUSTeK Computer Inc., Peitou, Taipei City (TW)
(72) Inventor: Tsai, Chin-Peng, Taipei (TW)
(74) Representative: Barth, Stephan Manuel

(57) **Abstract**

An audio/video device is provided. The audio/video device includes a first locking part, a first sound-transmitting unit, a second locking part, a second sound-transmitting unit and an amplifier. The first sound-transmitting unit outputs an audio signal. The second sound-transmitting unit and the first sound-transmitting unit output the same audio signal. The amplifier has a joint part and a speaker unit. The joint part is jointed with the first locking part or the second locking part. When the joint part is jointed with the first locking part, the speaker unit is electrically connected to the first sound-transmitting unit for broadcasting an audio signal. When the joint part is jointed with the second locking part, the speaker unit is electrically connected to the second sound-transmitting unit for broadcasting an audio signal.

## Description

### BACKGROUND OF THE INVENTION

### Field of the Invention

The invention relates in general to an audio/video device, and more particularly to an audio/video device with a detachable amplifier whose position is adjusted according to actual needs.

### Description of the Related Art

With the advance in audiovisual technology, audio/video device provides both audio and visual effects to enrich people's lives. Therefore, audio/video device has become an indispensable part in the everyday life of modern people. Examples of audio/video device include any electronic devices having image displaying and audio broadcasting functions such as TV, mobile phone, computer monitor, electronic dictionary or personal digital assistant (PDA).

In an audio/video device, the quality of audio broadcasting is critical to the quality of audiovisual effects. A conventional audio/video device includes a body and an amplifier. The amplifier is fixed on one surface of the body. The amplifier includes a speaker unit for receiving and converting an electrical signal into an audio signal and transmitting the audio signal outwards.

The audio signal is a sound wave to be transmitted to the ear of the user via the air. In order to improve the audiovisual quality of the conventional audio/video device, a resonating cavity is disposed inside the amplifier to increase the amplitude of vibration of the sound wave such that the quality of the audio signal is improved. The amplifier normally has a certain volume so as to form the resonating cavity. In terms of a flat TV which is mainly used for audiovisual entertainment, so the amplifier has a certain size of volume. A conventional flat TV is elaborated below with accompanied drawings.

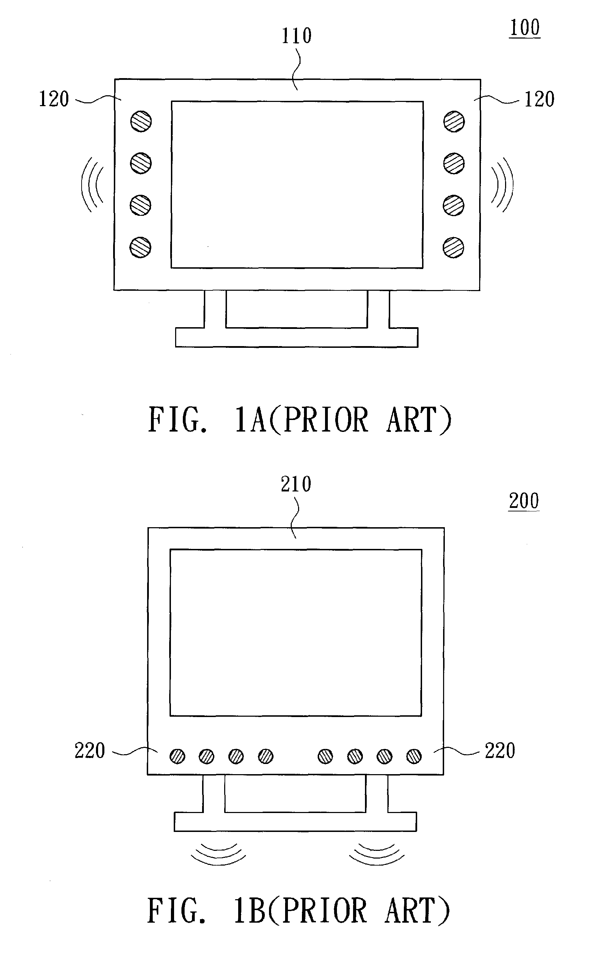

Referring to FIG. 1A, a conventional flat TV is shown. The conventional flat TV 100 includes a body 110 and two amplifiers 120. The two amplifiers 120 are fixed at the left side and the right side of the body 110 to produce Hi-Fi stereo and surrounding sound effects. The width of each amplifier 110 is approximate 10 to 20 cm, so the overall width of the conventional flat TV 100 is equal to the width of the body 110 plus the width (approximately 20 to 40 cm) of the two amplifiers 120. The two amplifiers 120 occupy a large amount of space, so the user has to find a large space for placing the flat TV 100.

Referring to FIG. 1B, another conventional flat TV is shown. In order to resolve the problem of occupying too much space by the two amplifiers, two amplifiers 220 of another flat TV 200 are fixed at the bottom of the body 210 to reduce the width of the flat TV 200. The two amplifiers 220 are fixed at the bottom of the body 210, so the sound wave reaches the ear of the user from down under. However, the quality of audiovisual effect is still not satisfactory.

To summarize, the disadvantages of conventional audio/video devices are ascribed to the disposition of the position of the amplifiers. In reality, some users place emphasis on the utilization of space, some on audiovisual quality while some on actual needs of the situations. Therefore, not an audio/video device is capable of satisfying the different needs of various users, and the practicality of the audio/video device is thus largely reduced. Hence, how to resolve the above problems has become an imminent challenge.

### SUMMARY OF THE INVENTION

It is therefore an object of the invention to provide an audio/video device. The design of having a detachable amplifier enables the disposition of the amplifier of the audio/video device to be adjusted according to actual situations and the needs of the users, not only reducing the space occupied by the audio/video device but also providing Hi-Fi stereo surrounding effect.

The invention achieves the above-identified object by providing an audio/video device. The audio/video device includes a first locking part, a first sound-transmitting unit, a second locking part, a second sound-transmitting unit and an amplifier. The first sound-transmitting unit outputs an audio signal. The second sound-transmitting unit outputs the same audio signal as the first sound-transmitting unit outputs. The amplifier has a joint part and a speaker unit. The joint part is jointed with the first locking part or the second locking part. When the joint part is jointed with the first locking part, the speaker unit is electrically connected to the first sound-transmitting unit for broadcasting audio signals. When the joint part is jointed with the second locking part, the speaker unit is electrically connected to the second sound-transmitting unit for broadcasting audio signals.

The invention further achieves the above-identified object by providing an audio/video device. The audio/video device includes a number of the first locking parts, a first sound-transmitting unit, a number of second locking parts, a second sound-transmitting unit and a number of amplifiers. The first sound-transmitting unit outputs a number of separate sound channel audio signals. The second sound-transmitting unit outputs the same separate sound channel audio signal as the first sound-transmitting unit outputs. Each amplifier has a joint part and a speaker unit. The joint parts are respectively jointed with the first locking part or the second locking part. When the joint part is jointed with the first locking part, the speaker unit is electrically connected to the first sound-transmitting unit for respectively broadcasting each of the separate sound channel audio signals. When the joint part is jointed with the second locking part, the speaker unit is electrically connected to the second sound-transmitting unit for respectively broadcasting each of the separate sound channel audio signals.

Other objects, features, and advantages of the invention will become apparent from the following detailed description of the preferred but non-limiting embodiments. The following description is made with reference to the accompanying drawings.

### BRIEF DESCRIPTION OF THE DRAWINGS

FIG. 1A (prior art) illustrates a conventional flat TV;

FIG. 1B (prior art) illustrates another conventional flat TV;

FIGS. 2A~2B illustrate the state when the amplifier of the audio/video device being jointed with the first locking part according to a first preferred embodiment of the invention;

FIG. 2C is a block diagram of the audio/video device of FIG. 2B;

FIGS. 2D~2E illustrate the state when the amplifier of the audio/video device is jointed with the second locking part according to a first preferred embodiment of the invention;

FIG. 2F is a block diagram of the audio/video device of FIG. 2E;

FIGS. 3A~3B illustrate the state when the amplifier of the audio/video device is jointed with the first locking part according to a second preferred embodiment of the invention;

FIG. 3C is a block diagram of the audio/video device of FIG. 3B;

FIGS. 3D∼3E illustrate the state when the amplifier of the audio/video device being jointed with the second locking part according to a second preferred embodiment of the invention;

FIG. 3F is a block diagram of the audio/video device of FIG. 3E;

FIGS. 4A∼4B illustrate the state when the amplifier of the audio/video device is jointed with third locking part according to a third preferred embodiment of the invention; and

FIGS. 4C is a block diagram of the audio/video device of FIG. 4B.

### DETAILED DESCRIPTION OF THE INVENTION

### First Embodiment

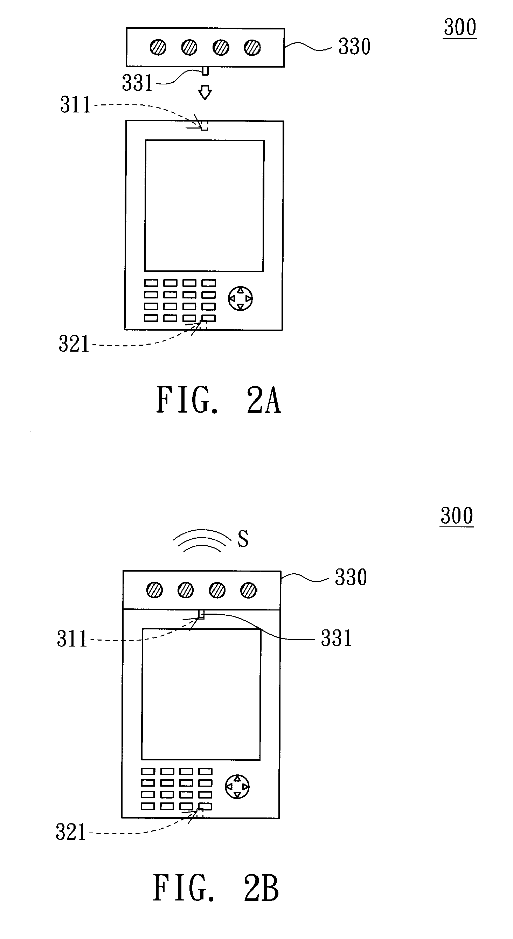

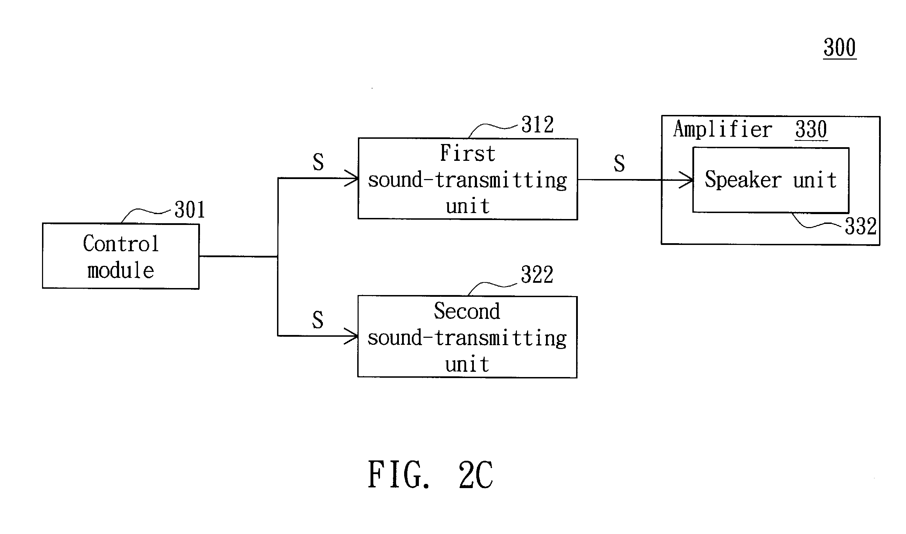

Referring to FIGS. 2A∼2C at the same time. FIGS. 2A~2B illustrate the state when the amplifier of the audio/video device is jointed with the first locking part according to a first preferred embodiment of the invention. FIG. 2C is a block diagram of the audio/video device of FIG. 2B. Examples of the audio/video device 300 include personal digital assistant (PDA), electronic dictionary, TV, display monitor, mobile phone or any other electronic devices having image displaying and audio playing functions. In the preferred embodiment of the invention, the audio/video device 300 is exemplified by a PDA. The audio/video device 300 includes a first locking part 311, a second locking part 321 and an amplifier 330. The first locking part 311 is disposed at the top of the audio/video device 300. The second locking part 321 is disposed at the bottom of the audio/video device 300. In the preferred embodiment of the invention, both the first locking part 311 and the second locking part 321 are a slot. The amplifier 330 has a joint part 331 jointed with the first locking part 311 or the second locking part 321. As sown in FIG. 2B, the joint part 331 is jointed with the first locking part 311, such that the amplifier 330 is disposed at the top of the audio/video device 300. When the joint part 331 is jointed with the first locking part 311, the amplifier 330 is electrically connected to the internal components of the audio/video device 300 via the joint part 331 and the first locking part 311.

Referring to FIG. 2C, the audio/video device 300 further includes a control module 301, a first sound-transmitting unit 312 and a second sound-transmitting unit 322. The control module 301 is for providing an audio signal S. The first sound-transmitting unit 312 is electrically connected to the control module 301 for receiving and outputting the audio signal S. The second sound-transmitting unit 322 is electrically connected to the control module 301 for receiving and outputting the audio signal S. In the preferred embodiment of the invention, the audio signal S is a single sound channel audio signal. The amplifier 330 further has a speaker unit 332.

Referring to both FIG. 2B and FIG. 2C. When the joint part 331 is jointed with the first locking part 311, the speaker unit 332 is electrically connected to the first sound-transmitting unit 312, and the audio signal S is transmitted to the speaker unit 332 for broadcasting the audio signal S via the first sound-transmitting unit 312. Meanwhile, the audio/video device 300 emits the audio signal S to the user from the top of the audio/video device 300.

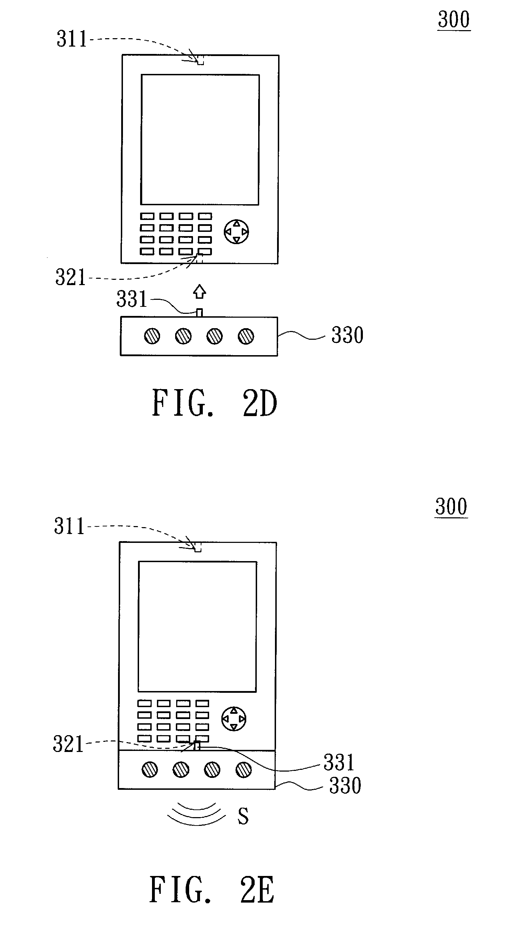

Referring to FIG. 2D∼2E at the same time. FIG. 2D∼2E illustrate the state when the amplifier of the audio/video device is jointed with the second locking part according to a first preferred embodiment of the invention. As sown in FIG. 2E, the joint part 331 is jointed with the second locking part 321, such that the amplifier 330 is disposed at the top of the audio/video device 300. When the joint part 331 is jointed with the second locking part 321, the amplifier 330 is electrically connected to the internal components of the audio/video device 300 via the joint part 331 and the second locking part 321.

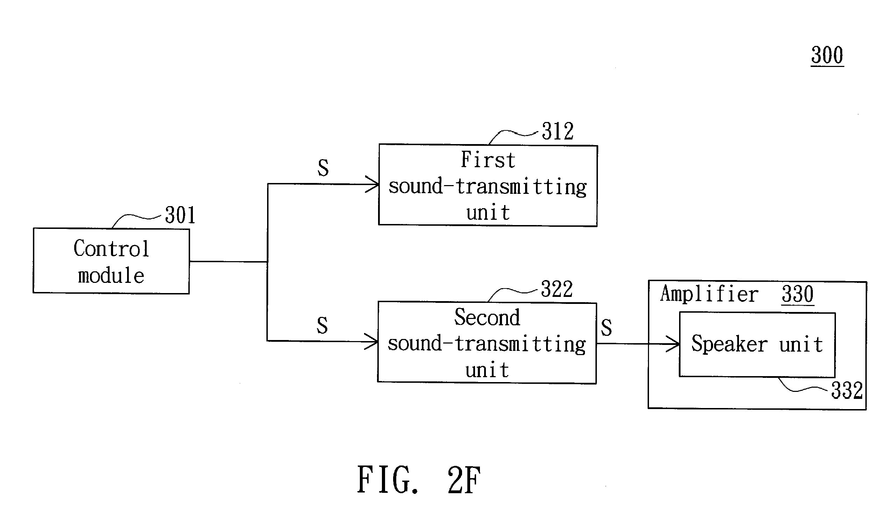

Referring to both FIG. 2D and FIG. 2F. FIG. 2F is a block diagram of the audio/video device of FIG. 2E. When the joint part 331 is jointed with the second locking part 321, the speaker unit 332 is electrically connected to the second sound-transmitting unit 322, and the audio signal S is transmitted to the speaker unit 332 for broadcasting the audio signal S via the second sound-transmitting unit 322. Meanwhile, the audio/video device 300 emits the audio signal S to the user from the bottom of the audio/video device 300.

Therefore, the user is able to joint the amplifier 330 with the first locking part 311 or the second locking part 321 according to the needs of the situations, which is indeed very convenient. Besides, the user is able to detach the amplifier 330 from the body of the audio/video device 300 such that the volume of the audio/video device 300 is reduced.

### Second Embodiment

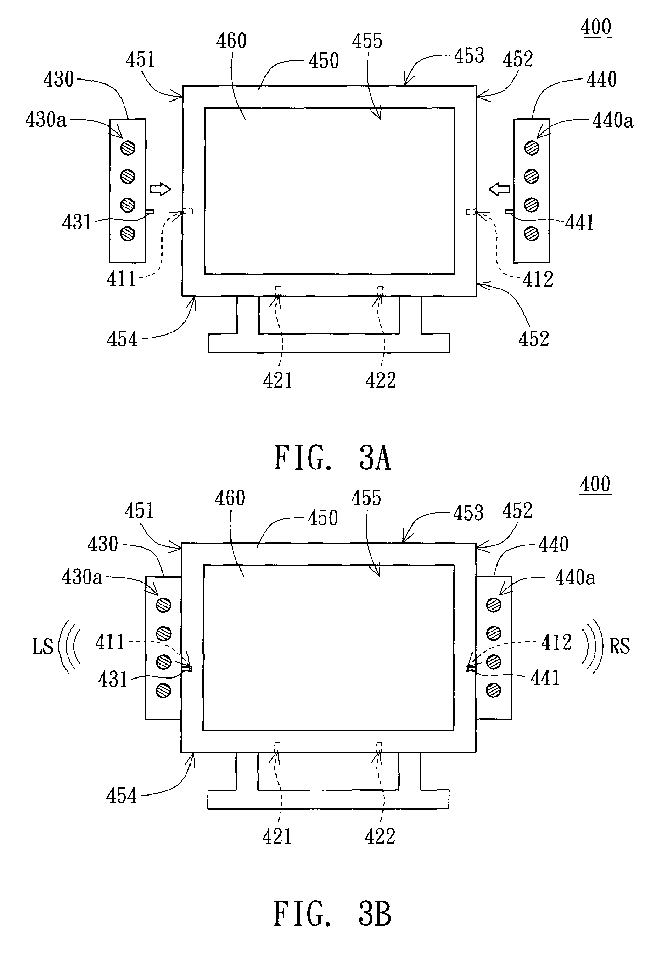

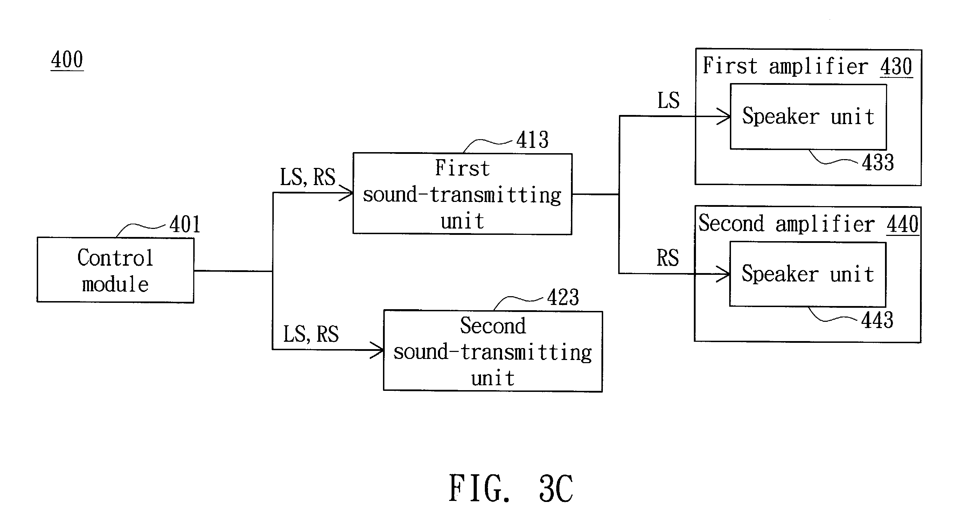

Referring to FIG. 3A∼3C at the same time. FIGS. 3A∼3B illustrate the state when the amplifier of the audio/video device is jointed with the first locking part according to a second preferred embodiment of the invention. FIG. 3C is a block diagram of the audio/video device of FIG. 3B. In the preferred embodiment of the invention, the audio/video device 400 is exemplified by a flat TV. The audio/video device 400 includes a housing 450, a number of first locking parts, a number of second locking parts and a number of amplifiers. In the preferred embodiment of the invention, the amplifier is exemplified by a first amplifier 430 and a second amplifier 440. The first amplifier 430 is for emitting a left sound channel audio signal LS. The second amplifier 440 is for emitting a right sound channel audio signal RS. The housing 450 has a first lateral surface 451, a second lateral surface 452, a top surface 453 and a bottom surface 454. Two first locking parts are respectively disposed on the first lateral surface 451 of the audio/video device 400 and the second lateral surface 452 of the audio/video device 400. The two first locking parts are respectively coupled to the first amplifier 430 and the second amplifier 440. Two second locking parts are both positioned on the bottom surface 454 of the audio/video device 400. The two second locking parts are respectively coupled to the first amplifier 430 and the second amplifier 440. Each of the two amplifiers has a corresponding joint part. The joint part is jointed with the first locking part or the second locking part.

In the preferred embodiment of the invention, the two first locking parts 410 include a first slot 411 and a second slot 412. The first slot 411 is disposed on the first lateral surface 451. The second slot 412 is disposed on the second lateral surface 452. The two second locking parts 420 include a third slot 421 and a fourth slot 422. Both the third slot 421 and the fourth slot 422 are disposed on the bottom surface 454. The joint parts of the first amplifier 430 and the second amplifier 440 are respectively a first hook 431 and a second hook 441. The first hook 431 is jointed with the first slot 411 or the third slot 421. The second hook 441 is jointed with the second slot 412 or the fourth slot 422.

As sown in FIG. 3B, when the first amplifier 430 and the second amplifier 440 are coupled to the first locking part, the first hook 431 is jointed with the first slot 411, such that the first amplifier 430 is disposed on the first lateral surface 451 of the audio/video device 400. The second hook 441 is jointed with the second slot 412, such that the second amplifier 440 is disposed on the second lateral surface 452 of the audio/video device 400.

Referring to FIG. 3C, the audio/video device 400 includes a control module 401, a first sound-transmitting unit 413 and a second sound-transmitting unit 423. The control module 401 is for providing a number of separate sound channel audio signals. The first sound-transmitting unit 413 is electrically connected to the control module 401 for receiving and outputting the separate sound channel audio signals. The second sound-transmitting unit 423 is electrically connected to the control module 401 for receiving and outputting the separate sound channel audio signals. The separate sound channel audio signals are a left sound channel audio signal LS and a right sound channel audio signal RS. The first amplifier 430 further has a speaker unit 433. The second amplifier 440 further has a speaker unit 443.

Referring to both FIG. 3B and FIG. 3C. When the first hook 431 is jointed with the first slot 411, the speaker unit 433 is electrically connected to the first sound-transmitting unit 413, and the left sound channel audio signal LS is transmitted to the speaker unit 433 for broadcasting the left sound channel audio signal LS via the first sound-transmitting unit 413. When the second hook 441 is jointed with the second slot 412, the speaker unit 443 is electrically connected to the first sound-transmitting unit 413, and the right sound channel audio signal RS is transmitted to the speaker unit 443 for broadcasting the right sound channel audio signal RS via the first sound-transmitting unit 413. Meanwhile, the audio/video device 400 emits a left sound channel audio signal LS and a right sound channel audio signal RS to the user from the left side and the right side. Therefore, the audio/video device 400 is capable of producing Hi-Fi stereo and surrounding effect to satisfy the user's requirements of audiovisual quality.

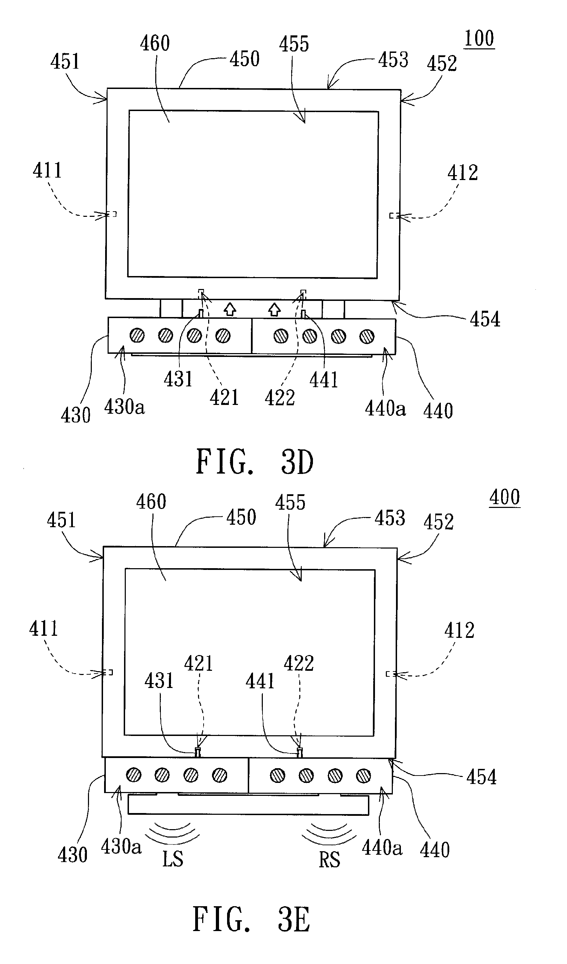

Referring to FIG. 3D∼3E at the same time. FIGS. 3D∼3E illustrate the atate when the amplifier of the audio/video device being jointed with the second locking part according to a second preferred embodiment of the invention. As sown in FIG. 3E, when the first amplifier 430 and the second amplifier 440 are coupled to the second locking part, the first hook 431 is jointed with third slot 421, such that the first amplifier 430 is disposed on the left side of the bottom surface 454 of the audio/video device 400. The second hook 441 is jointed with fourth slot 422, such that the second amplifier 440 is disposed on the right side of the bottom surface 454 of the audio/video device 400.

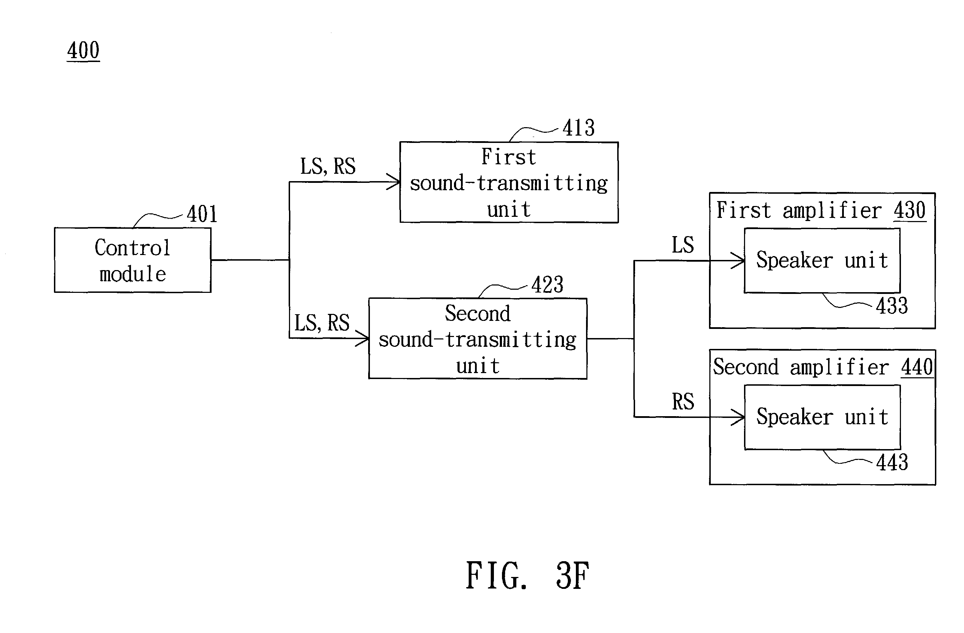

Referring to both FIG. 3E and FIG. 3F. FIG. 3F is a block diagram of the audio/video device of FIG. 3E. When the first hook 431 is jointed with third slot 421, the speaker unit 433 is electrically connected to the second sound-transmitting unit 423, and the left sound channel audio signal LS is transmitted to the speaker unit 433 for broadcasting left sound channel audio signal LS via the second sound-transmitting unit 423. When the second hook 441 is jointed with fourth slot 422, the speaker unit 443 is electrically connected to the second sound-transmitting unit 423, and the right sound channel audio signal RS is transmitted to the speaker unit 443 for broadcasting the right sound channel audio signal RS via the second sound-transmitting unit 423. Meanwhile, the audio/video device 400 emits a left sound channel audio signal LS and a right sound channel audio signal RS to the user from the bottom of the audio/video device 400. Therefore, the width of the audio/video device 400 is reduced for enabling the audio/video device 400 to be placed in a smaller lounge.

Therefore, the user is able to joint the first amplifier 430 and the second amplifier 440 with the first locking part or the second locking part according to the needs of actual needs to satisfy the needs of the users.

The audio/video device 400 of the preferred embodiment of the invention further includes a display panel 460 having a display surface 460a. The display panel 460 displays an image for the user to view via the display surface 460a. The first amplifier 430 and the second amplifier 440 respectively have a first sound-emitting surface 430a and a second sound-emitting surface 440a. The first amplifier 430 and the second amplifier 440 display the sound for the user to listen via the first sound-emitting surface 430a and the second sound-emitting surface 440a. Preferably, the normal lines of the display surface 460a, the first sound-emitting surface 430a and the second sound-emitting surface 440a are disposed in parallel and facing the same direction to provide a better audiovisual effect.

Preferably, the speaker unit 433 and the speaker unit 443 are electrically and respectively connected to the first sound-transmitting unit 413 and the second sound-transmitting unit 423 via hot plug.

### Third Embodiment

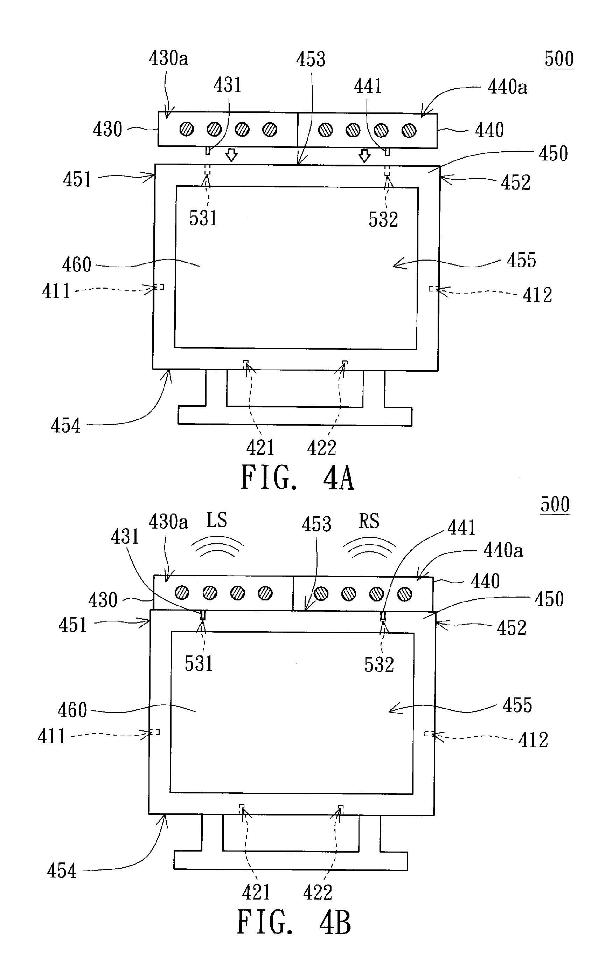

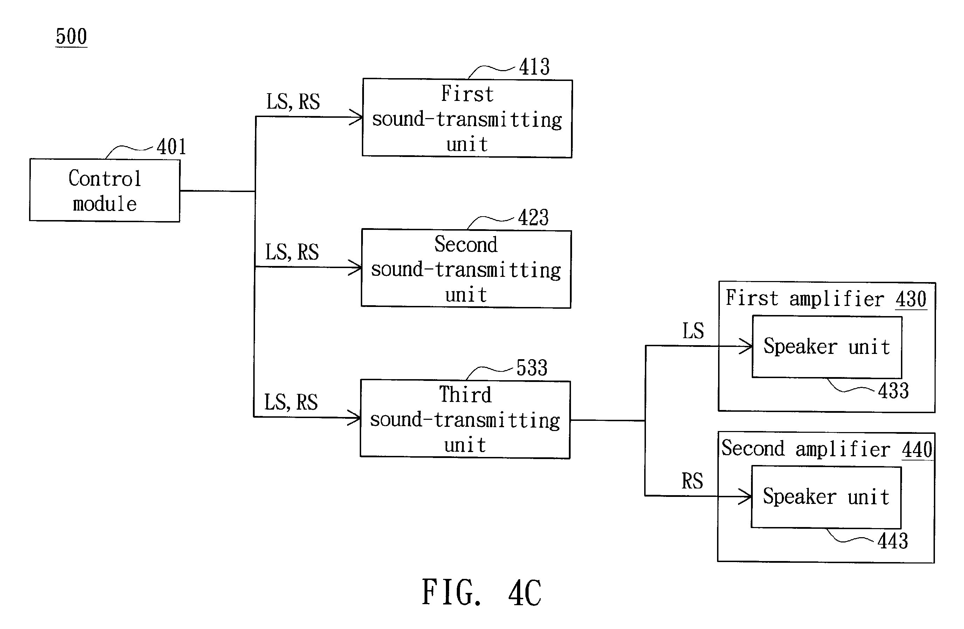

Referring to FIG. 4A∼4C at the same time. FIG. 4A~4B illustrate the state when the amplifier of the audio/video device is jointed with the third locking part according to a third preferred embodiment of the invention. FIG. 4C is a block diagram of the audio/video device of FIG. 4B. The audio/video device 500 of the present preferred embodiment differs with the audio/video device 400 of the second preferred embodiment in the third locking part. The same components depicted in the second embodiments are denoted by the same reference numbers and are not repeated here.

In the preferred embodiment of the invention, the audio/video device 500 further includes a number of third locking parts. The third locking parts are disposed on the top surface 453 of the audio/video device 500. The preferred embodiment of the invention is exemplified by two third locking parts. Each amplifier has a corresponding joint part. The joint part is jointed with the first locking part, the second locking part or third locking part, such that the amplifier is disposed on the two sides, the bottom surface or the top surface of the audio/video device 500.

In the preferred embodiment of the invention, the third locking part includes a fifth slot 531 and a sixth slot 532. Both the fifth slot 531 and the sixth slot 532 are disposed on the top surface 453. The first hook 431 of the first amplifier 430 is for jointing with the first slot 411, the third slot 421 or the fifth slot 531. The second hook 441 of the second amplifier 440 is for jointing with the second slot 412, the fourth slot 422 or the sixth slot 532.

As sown in FIG. 4B, when the first amplifier 430 and the second amplifier 440 are coupled with the third locking part, the first hook 431 is jointed with the fifth slot 531, such that the first amplifier 430 is disposed on the left side of the top surface 453 of the audio/video device 500. The second hook 441 is jointed with the sixth slot 532, such that the second amplifier 440 is disposed on the right side of the top surface 453 of the audio/video device 500.

Referring to FIG. 4C, the third sound output terminal 530 further has a third sound-transmitting unit 533 electrically connected to the control module 401 for receiving and outputting the separate sound channel audio signal.

Referring to both FIG. 4B and FIG. 4C. When the first hook 431 is jointed with the fifth slot 531, the speaker unit 433 is electrically connected to the third sound-transmitting unit 533, and the left sound channel audio signal LS is transmitted to the speaker unit 433 for broadcasting a left sound channel audio signal LS via the third sound-transmitting unit 533. When the second hook 441 is jointed with the sixth slot 532, the speaker unit 443 is electrically connected to the third sound-transmitting unit 533, and the right sound channel audio signal RS is transmitted to the speaker unit 443 for broadcasting the right sound channel audio signal RS via the third sound-transmitting unit 533. Meanwhile, the audio/video device 500 emits a left sound channel audio signal LS and a right sound channel audio signal RS to the user from the top of the audio/video device 500. Therefore, the width of the audio/video device 500 is reduced for enabling the audio/video device 500 to be placed in a smaller lounge.

According to the above three preferred embodiments, the first locking part, the second locking part or the third locking part are respectively exemplified by the first slot 411, the second slot 412, the third slot 421, the fourth slot 422, the fifth slot 531 and the sixth slot 532, and the joint part is exemplified by the first hook 431 and the second hook 441. However, in the invention, the linking connection between the first locking part, the second locking part or the third locking part and the joint part is not limited thereto. Any design enabling the amplifier to be mechanically connected to the first lateral surface, the second lateral surface, the bottom surface or the top surface of the audio/video device, and enabling the speaker unit to be electrically connected to the first sound-transmitting unit, the second sound-transmitting unit or the third sound-transmitting unit is within the scope of the technology of the invention.

According to the audio/video device disclosed in the above preferred embodiments of the invention, the disposition of the detachable amplifier is adjusted according to actual needs of the situations and the users, not only reducing the space occupied by the audio/video device but also providing Hi-Fi stereo and surrounding effect.

While the invention has been described by way of example and in terms of three preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. An audio/video device, comprising:
a first locking part;
a first sound-transmitting unit for outputting an audio signal;
a second locking part;
a second sound-transmitting unit for outputting the same the audio signal as the first sound-transmitting unit outputs; and
an amplifier having a joint part and a speaker unit, wherein the joint part is jointed with the first locking part or the second locking part;
wherein, when the joint part is jointed with the first locking part, the speaker unit is electrically connected to the first sound-transmitting unit for broadcasting the audio signal, and when the joint part is jointed with the second locking part, the speaker unit is electrically connected to the second sound-transmitting unit for broadcasting the audio signal.

2. The audio/video device according to claim 1, further comprising:
a display panel for displaying an image.

3. The audio/video device according to claim 1, wherein the speaker unit is electrically connected to the first sound-transmitting unit and the second sound-transmitting unit via hot plug.

4. An audio/video device, comprising:
a plurality of first locking parts;
a first sound-transmitting unit for outputting a plurality of separate sound channel audio signals;
a plurality of second locking parts;
a second sound-transmitting unit for outputting the same the separate sound channel audio signals as the first sound-transmitting unit outputs; and
a plurality of amplifiers each having a joint part and a speaker unit,
wherein the joint parts are respectively jointed with the first locking parts or the second locking parts;
wherein, when the joint parts are jointed with the first locking parts, the speaker units are electrically connected to the first sound-transmitting units for respectively broadcasting each of the separate sound channel audio signals, and when the joint parts are jointed with the second locking parts, the speaker units are electrically connected to the second sound-transmitting units for respectively broadcasting each of the separate sound channel audio signals.

5. The audio/video device according to claim 4, wherein the amplifiers comprise a first amplifier and a second amplifier, while the separate sound channel audio signals comprise a left sound channel audio signal and a right sound channel audio signal.

6. The audio/video device according to claim 5, wherein the first locking parts comprise a first slot and a second slot, the joint parts comprise a first hook and a second hook, the first hook corresponds to the first amplifier, the second hook corresponds to the second amplifier, and when the first hook and the second hook are respectively jointed with the first slot and the second slot, the speaker unit of the first amplifier and the speaker unit of the second amplifier are electrically connected to the first sound-transmitting unit for respectively broadcasting the left sound channel audio signal and the right sound channel audio signal.

7. The audio/video device according to claim 6, wherein the second locking parts comprise a third slot and a fourth slot, when the first hook and the second hook are respectively jointed with the third slot and the fourth slot, the speaker unit of the first amplifier and the speaker unit of the second amplifier are electrically connected to the second sound-transmitting unit for respectively broadcasting the left sound channel audio signal and the right sound channel audio signal.

8. The audio/video device according to claim 7, further comprising:
a housing having a first lateral surface, a second lateral surface, a top surface and a bottom surface, wherein the first slot is disposed on the first lateral surface, the second slot is disposed on the second lateral surface, and both the third slot and the fourth slot are disposed on the bottom surface.

9. The audio/video device according to claim 8e, further comprising:
a plurality of third locking parts;
a third sound-transmitting unit for outputting the separate sound channel audio signals.

10. The audio/video device according to claim 9, wherein the third locking parts comprise a fifth slot and a sixth slot both disposed on the top surface, and when the first hook and the second hook are respectively jointed with the fifth slot and the sixth slot, the speaker unit of the first amplifier and the speaker unit of the second amplifier are electrically connected to the third sound-transmitting unit for respectively broadcasting the left sound channel audio signal and the right sound channel audio signal.

11. The audio/video device according to claim 8, further comprising:
a display panel disposed in the housing for displaying an image.

12. The audio/video device according to claim 11, wherein the display panel has a display surface, the first amplifier has a first sound-emitting surface, the second amplifier has a second sound-emitting surface, and the normal lines of the display surface, the first sound-emitting surface and the second sound-emitting surface are disposed in parallel and facing the same direction.

13. The audio/video device according to claim 4, wherein the speaker unit is electrically connected to the first sound-transmitting unit and the second sound-transmitting unit via hot plug.
